(19) Europäisches Patentamt
European Patent Office
Office européen des brevets

(11) EP 4 509 548 A1

(12) **EUROPEAN PATENT APPLICATION**
published in accordance with Art. 153(4) EPC

(43) Date of publication:
**19.02.2025 Bulletin 2025/08**

(21) Application number: **23788508.2**

(22) Date of filing: **30.03.2023**

(51) International Patent Classification (IPC):
***C08G 73/10*** *(2006.01)* ***C08L 79/08*** *(2006.01)*
***C08K 5/521*** *(2006.01)* ***C08K 5/50*** *(2006.01)*
***C08J 5/18*** *(2006.01)*

(52) Cooperative Patent Classification (CPC):
**C08G 73/10; C08J 5/18; C08K 5/50; C08K 5/521; C08L 79/08**

(86) International application number:
**PCT/KR2023/004311**

(87) International publication number:
**WO 2023/200156 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 KR 20220046936**
**08.09.2022 KR 20220114070**
**08.09.2022 KR 20220114071**
**27.03.2023 KR 20230039433**
**27.03.2023 KR 20230039434**

(71) Applicant: **PI Advanced Materials Co., Ltd.**
**Chungcheongbuk-do 27818 (KR)**

(72) Inventors:
- **PARK, Se Joo**
  **Jincheon-gun Chungcheongbuk-do 27818 (KR)**
- **WE, Jung Hoon**
  **Jincheon-gun Chungcheongbuk-do 27818 (KR)**
- **PARK, Joon Chul**
  **Jincheon-gun Chungcheongbuk-do 27818 (KR)**
- **LEE, Ik Sang**
  **Jincheon-gun Chungcheongbuk-do 27818 (KR)**

(74) Representative: **Eisenführ Speiser**
**Patentanwälte Rechtsanwälte PartGmbB**
**Postfach 10 60 78**
**28060 Bremen (DE)**

(54) **POLYIMIDE PRECURSOR**

(57) The present application provides a polyimide precursor capable of realizing a polyimide with high adhesive strength, high surface flatness, and good durability in an environmentally friendly manner, a method of preparing the polyimide precursor, and a polyimide film including a cured product of the polyimide precursor.

EP 4 509 548 A1

## Description

BACKGROUND

### 1. Field of the Invention

The present application relates to a polyimide precursor, a method of preparing the polyimide precursor, and a polyimide film including a cured product of the polyimide precursor.

### 2. Discussion of Related Art

In general, a polyimide (PI) is a polymer of an imide monomer formed by solution polymerization of a dianhydride and a diamine or diisocyanate, and has mechanical properties such as good strength, chemical resistance, weather resistance, and heat resistance, based on the chemical stability of an imide ring. In addition, polyimides are attracting attention as high-functional polymer materials applicable to a wide range of industrial fields such as electronics, communications, and optics due to their excellent electrical properties such as insulation and a low dielectric constant.

Here, a polyimide is a highly heat-resistant resin prepared by solution polymerization of a dianhydride monomer and a diamine monomer to prepare a polyamic acid, followed by ring closure dehydration at a high temperature for imidization.

SUMMARY OF THE INVENTION

The present application provides a polyimide precursor capable of realizing a polyimide with high adhesive strength, high surface flatness, good durability, and a high imidization rate in an environmentally friendly manner, a method of preparing the polyimide precursor, and a polyimide film including a cured product of the polyimide precursor.

The present application relates to a polyimide precursor. For example, the polyimide precursor may be a polyimide varnish that is imidized by thermal curing after being applied to a coating target. As the polyimide precursor includes a composition described below, it is possible to provide a polyimide with high adhesive strength, high surface flatness, and good durability in an environmentally friendly manner.

An exemplary polyimide precursor according to the present application includes: a polyamic acid including a dianhydride monomer and a diamine monomer as polymerization units; an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA); a silicon-containing first additive including at least one functional group; and one or more second additives selected from a phosphorus-based additive having an aromatic ring group and an amine-based additive having an aromatic or heteroaromatic ring group.

In addition, a weight average molecular weight of the polyamic acid may be in a range of 40,000 to 100,000 g/mol, 45,000 to 90,000 g/mol, 48,000 to 80,000 g/mol, 50,000 to 75,000 g/mol, or 51,000 to 70,000 g/mol. In the present application, the term "weight average molecular weight" means a conversion value for standard polystyrene as measured by gel permeation chromatography (GPC).

The polyimide precursor according to the present invention may be a polyamic acid solution including a polyamic acid, an organic solvent, a silicon-containing first additive and one or more second additives selected from a phosphorus-based additive having an aromatic ring group and an amine-based additive having an aromatic or heteroaromatic ring group. In the present invention, the polyimide precursor, the polyamic acid solution, and the polyimide varnish are interpreted as having the same meaning.

The polyamic acid may be prepared through a polymerization reaction of a dianhydride monomer and a diamine monomer in the presence of the above-described organic solvent, and may be one which the polymer is mixed with the silicon-containing additive. As the polyamic acid of the present invention is polymerized in the presence of the organic solvent, a weight average molecular weight may increase to satisfy the above-described numerical range.

In the present invention, the silicon-containing first additive may be a silane-based compound or a siloxane-based compound. In addition, as the silicon-containing first additive is mixed with the polyamic acid after the polymerization reaction is completed, the additive may not be included in a polymerization unit of the polyamic acid, and may instead interact with the polyamic acid or polyimide through a functional group to contribute to realizing a polyimide having high adhesive strength, high surface flatness, and good durability. In addition, as one or more second additives selected from a phosphorus-based additive and an amine-based additive are mixed with the polyamic acid after the polymerization reaction is completed, it may contribute to increasing the imidization rate and durability during curing of the polyamic acid.

It is possible to provide a polyimide with high adhesive strength, high surface flatness and good durability when the additives are mixed with the polymerized polyamic acid in the presence of the organic solvent and cured.

In one embodiment, the organic solvent may have a negative (-) octanol/water partition coefficient (Log P)

calculated according to Equation 1 below.

[Equation 1]

$$\text{Log P} = \text{Log (Kow)}$$

$$\text{Kow} = \text{Co/Cw}$$

In Equation 1, Co is a solute concentration in octanol, and Cw is a solute concentration in water.

The partition coefficient may be calculated using an ACD/LogP module of the ACD/Percepta platform of ACD/Labs under the temperature condition of 25 °C, where the ACD/LogP module may use a quantitative structure-property relationship (QSPR) methodology-based algorithm using the 2D structure of a molecule. However, since the partition coefficient is an experimental value, the possibility of it being measured as a positive (+) value cannot be ruled out depending on the measurement method or used algorithm.

Examples of the organic solvent having a negative partition coefficient may include N-methyl-2-pyrrolidone (NMP), dimethylformamide (DMF) or N,N-dimethylpropionamide (DMPA), and considering an environmentally friendly aspect, DMPA may be preferred.

Considering an environmentally friendly aspect, the organic solvent may be N,N-dimethylpropionamide (DMPA). DMPA is an environmentally friendly organic solvent that can be treated without a separate purification process after a polymerization reaction and therefore has a reduced cost, and in addition, DMPA may control the weight average molecular weight of the polyamic acid within the above-described numerical range during polymerization of the polyamic acid in a DMPA solvent. On the other hand, although the polyamic acid polymerized in the DMPA solvent may exhibit a low imidization rate when cured, the polyimide precursor according to the present invention has an effect of improving the low imidization rate when including a phosphorus-based additive or an amine-based additive.

Meanwhile, the organic solvent may not include N-methyl-2-pyrrolidone (NMP). A polyamic acid polymerized in the presence of N-methyl-2-pyrrolidone may not satisfy a weight average molecular weight within the above-described range. In addition, since NMP is classified as a hazardous substance, additional costs are required for purification, and there is a problem of causing environmental pollution during the treatment process.

In one embodiment, a content of the silicon-containing first additive may be 0.0001 to 1% by weight based on the total polyimide precursor. For example, a content of the silicon-containing first additive may be in range of 0.0001 to 0.9% by weight, 0.0001 to 0.8% by weight, 0.0001 to 0.7% by weight, 0.0001 to 0.6% by weight, 0.0001 to 0.5% by weight, 0.0001 to 0.4% by weight, 0.0001 to 0.3% by weight, 0.0001 to 0.2% by weight, 0.0001 to 0.1% by weight, 0.0001 to 0.09% by weight, 0.0001 to 0.08% by weight, 0.0001 to 0.07% by weight, 0.0001 to 0.06% by weight, 0.0001 to 0.05% by weight, 0.0001 to 0.04% by weight, 0.0001 to 0.03% by weight, 0.0001 to 0.02% by weight, 0.0001 to 0.01% by weight, 0.001 to 0.9% by weight, 0.001 to 0.8% by weight, 0.001 to 0.7% by weight, 0.001 to 0.6% by weight, 0.001 to 0.5% by weight, 0.001 to 0.4% by weight, 0.001 to 0.3% by weight, 0.001 to 0.2% by weight, 0.001 to 0.1% by weight, 0.001 to 0.09% by weight, 0.001 to 0.08% by weight, 0.001 to 0.07% by weight, 0.001 to 0.06% by weight, 0.001 to 0.05% by weight, 0.001 to 0.04% by weight, 0.001 to 0.03% by weight, 0.001 to 0.02% by weight, 0.001 to 0.01% by weight, 0.01 to 0.9% by weight, 0.01 to 0.8% by weight, 0.01 to 0.7% by weight, 0.01 to 0.6% by weight, 0.01 to 0.5% by weight, 0.01 to 0.4% by weight, 0.01 to 0.3% by weight, 0.01 to 0.2% by weight, 0.01 to 0.1% by weight, 0.01 to 0.09% by weight, 0.01 to 0.08% by weight, 0.01 to 0.07% by weight, 0.01 to 0.06% by weight, 0.01 to 0.05% by weight, 0.01 to 0.04% by weight, 0.01 to 0.03% by weight, or 0.01 to 0.02% by weight, based on the total polyimide precursor. A silicon-containing first additive having a content within the above range may be mixed with the polymerized polyamic acid to provide a polyimide with high adhesive strength, high surface flatness, and good durability during curing

The functional group of the silicon-containing first additive may be an amine group, a carboxyl group, an alcohol, an alkoxy group, a mercapto, an epoxy group, or an isocyanate. The silicon-containing additive is a monomer or polymer including at least one functional group, and may be, for example, a compound represented by Chemical Formula 1 below.

[Chemical Formula 1] $R_1R_2R_3Si\text{-}R\text{-}R_4$

in Chemical Formula 1,

at least one of $R_1$ to $R_3$ is an alkoxy group, and the rest is an organic group,
R is a single bond or a divalent organic group,
$R_4$ is an organic group having at least one functional group selected from an amine group, a carboxyl group, an alcohol, an alkoxy group, a mercapto, an epoxy group, and an isocyanate.

When the functional group is an amine group, γ-aminopropyltrimethoxysilane, γ-aminopropyltriethoxysilane, N-β-(aminoethyl)-γ-aminopropyltrimethoxysilane, N-β-(aminoethyl)-γ-aminopropylmethyldimethoxysilane, N-β-(aminoethyl)-γ-aminopropyltriethylsilane, γ-aminopropylmethyldiethoxysilane, γ-aminopropylmethyldimethoxysilane, γ-(N-phenylamino)propyltrimethoxysilane, γ-(N-phenylamino)propylmethyldimethoxysilane, γ-(N-methylamino)propyltrimethoxysilane, γ-(N-methylamino)propylmethyldimethoxysilane, γ-(N-ethylamino)propyltrimethoxysilane, γ-(N-ethylamino)propylmethyldimethoxysilane, N-[3-(trimethoxysilyl)propyl]aniline, and the like may be exemplified.

When the functional group is a mercapto, γ-mercaptopropyltrimethoxysilane, γ-mercaptopropyltriethoxysilane, γ-mercaptopropylmethyldimethoxysilane, and the like may be exemplified.

When the functional group is an epoxy group, γ-glycidoxypropyltrimethoxysilane, γ-glycidoxypropylmethyldimethoxysilane, γ-(2,3-epoxycyclohexyl)propyltrimethoxysilane, γ-glycidoxypropyltrimethoxysilane and the like may be exemplified.

Examples of the silicon-containing first additive which has an epoxy group as the functional group and is a polymer may include X-12-984S(manufactured by Shin-Etsu Chemical Co., Ltd.), and the like.

In addition, example of the silicon-containing additive which has an isocyanate group as the functional group and is a monomer may include 3-isocyanatopropyltriethoxysilane, and the like.

In another example, the polyimide precursor may include one or more second additives selected from a phosphorus-based additive having an aromatic ring group and an amine-based additive having an aromatic or heteroaromatic ring group.

The second additive may contribute to increasing the imidization rate and durability of the polyimide precursor.

In one embodiment, a content of the second additive may be 0.001 to 2% by weight based on the total polyimide precursor. For example, a content of the second additive may be in range of 0.001 to 1.9% by weight, 0.001 to 1.8% by weight, 0.001 to 1.7% by weight, 0.001 to 1.6% by weight, 0.001 to 1.5% by weight, 0.001 to 1.4% by weight, 0.001 to 1.3% by weight, 0.001 to 1.2% by weight, 0.001 to 1.1% by weight, 0.001 to 1% by weight, 0.001 to 0.9% by weight, 0.001 to 0.8% by weight, 0.001 to 0.7% by weight, 0.001 to 0.6% by weight, 0.001 to 0.5% by weight, 0.01 to 1.9% by weight, 0.01 to 1.8% by weight, 0.01 to 1.7% by weight, 0.01 to 1.6% by weight, 0.01 to 1.5% by weight, 0.01 to 1.4% by weight, 0.01 to 1.3% by weight, 0.01 to 1.2% by weight, 0.01 to 1.1% by weight, 0.01 to 1% by weight, 0.01 to 0.9% by weight, 0.01 to 0.8% by weight, 0.01 to 0.7% by weight, 0.01 to 0.6% by weight, 0.01 to 0.5% by weight, 0.1 to 1.9% by weight, 0.1 to 1.8% by weight, 0.1 to 1.7% by weight, 0.1 to 1.6% by weight, 0.1 to 1.5% by weight, 0.1 to 1.4% by weight, 0.1 to 1.3% by weight, 0.1 to 1.2% by weight, 0.1 to 1.1% by weight, 0.1 to 1% by weight, 0.1 to 0.9% by weight, 0.1 to 0.8% by weight, 0.1 to 0.7% by weight, 0.1 to 0.6% by weight, or 0.1 to 0.5% by weight, based on the total polyimide precursor. The second additive having a content within the above range may be mixed with the polyamic acid polymerized together with the silicon-containing additive to contribute to realizing a high imidization rate and increasing durability during curing.

In one example, the phosphorus-based additive may have an aromatic ring group. For example, the phosphorus-based additive may have one or more, two or more, or three or more aromatic ring groups, preferably three aromatic ring groups, and more preferably, the phosphorus-based additive may be triphenylphosphate or triphenylphosphine.

In one example, the amine-based additive may have a benzene ring group or a nitrogen atom-containing heteroaromatic ring group, and for example, the amine-based additive may be isoquinoline, beta-picoline, 1,2-dimethylimidazole, benzimidazole, triphenylamine, or 2-phenylimidazole, preferably triphenylamine.

In one embodiment, a dianhydride monomer may be aromatic tetracarboxylic dianhydride. For example, the dianhydride monomer includes at least one compound represented by Chemical Formula 2 below.

[Chemical Formula 2]

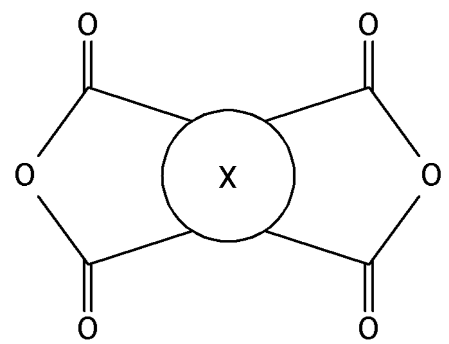

In Chemical Formula 2, X is a tetravalent aliphatic ring group, a tetravalent heteroaliphatic ring group, a tetravalent aromatic ring group, or a tetravalent heteroaromatic ring group, and a carbon atom of the carbonyl group

in Chemical Formula 2 is linked to a ring-constituting atom of the aliphatic ring group, the heteroaliphatic ring group, the aromatic ring group, or the heteroaromatic ring group,

wherein the aliphatic ring group, the heteroaliphatic ring group, the aromatic ring group, or the heteroaromatic ring group is a monocyclic ring; is conjugated to each other to form a polycyclic ring; or is linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, -S-, -C(=O)-, $-S(=O)_2-$ and $-Si(R_b)_2-$, wherein $R_b$ is hydrogen or an alkyl group.

Preferably, X is phenyl, biphenyl,

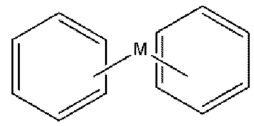

or an aliphatic ring group,

M includes at least one selected from the group consisting of a single bond, an alkylene group, an alkylidene group, -O-, -S-, -C(=O)-, and $-S(=O)_2-$.

In this specification, the term "aliphatic ring group" may mean an aliphatic ring group having 3 to 30 carbon atoms, 4 to 25 carbon atoms, 5 to 20 carbon atoms, and 6 to 16 carbon atoms, unless otherwise specified. Specific examples of a tetravalent aliphatic ring group may include groups obtained by removing four hydrogen atoms from a ring, such as a cyclohexane ring, a cycloheptane ring, a cyclodecane ring, a cyclododecane ring, a norbornane ring, an isobornane ring, an adamantane ring, a cyclododecane ring, and a dicyclopentane ring.

In this specification, the term "aromatic ring group" may mean an aromatic ring group having 4 to 30 carbon atoms, 5 to 25 carbon atoms, 6 to 20 carbon atoms, and 6 to 16 carbon atoms, unless otherwise specified, and the aromatic ring may be a monocyclic ring or a condensed ring. Examples of the tetravalent aromatic hydrocarbon ring group include groups obtained by removing four hydrogen atoms from a benzene ring, a naphthalene ring, an anthracene ring, a phenanthrene ring, a perylene ring, a tetracene ring, or a pyrene ring.

In this specification, the term "arylene group" may mean a divalent organic group derived from the aromatic ring group.

In this specification, the term "heterocyclic group" includes a heteroaliphatic ring group and a heteroaromatic ring group.

In this specification, the term "heteroaliphatic ring group" may refer to a ring group in which at least one of the carbon atoms of the aliphatic ring group is replaced with one or more heteroatoms selected from the group consisting of nitrogen, oxygen, sulfur, and phosphorus.

In this specification, the term "heteroaromatic ring group" may refer to a ring group in which at least one of the carbon atoms of the aromatic ring group is replaced with one or more heteroatoms selected from the group consisting of nitrogen, oxygen, sulfur, and phosphorus, unless otherwise specified. The heteroaromatic ring group may be a monocyclic ring or a condensed ring.

The aliphatic ring group, the heteroaliphatic ring group, the aromatic ring group, or the heteroaromatic ring group may each independently substituted with one or more substituents selected from the group consisting of halogen, a hydroxyl group, a carboxy group, a halogen-substituted or unsubstituted alkyl group having 1 to 4 carbon atoms, and an alkoxy group having 1 to 4 carbon atoms.

In this specification, the term "single bond" may mean a bond linking both atoms without any atoms. For example, when X in Chemical Formula 2 is

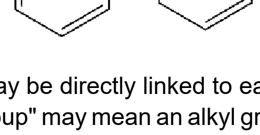

and M is a single bond, both aromatic rings may be directly linked to each other.

In this specification, the term "alkyl group" may mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may have a linear, branched or cyclic structure and may be optionally substituted with one or more substituents. The substituent may be, for example, a polar functional group such as one or more substituents consisting of halogen, a hydroxyl group, an alkoxy group, a thiol group, or a thiol ether group.

In this specification, the term "alkenyl group" may mean an alkenyl group having 2 to 30 carbon atoms, 2 to 25

carbon atoms, 2 to 20 carbon atoms, 2 to 16 carbon atoms, 2 to 12 carbon atoms, 2 to 8 carbon atoms, or 2 to 4 carbon atoms, unless otherwise specified. The alkenyl group may have a linear, branched or cyclic structure and may be optionally substituted with one or more substituents. The substituent may be, for example, a polar functional group such as one or more substituents consisting of halogen, a hydroxyl group, an alkoxy group, a thiol group, or a thiol ether group.

In this specification, the term "alkynyl group" may mean an alkynyl group having 2 to 30 carbon atoms, 2 to 25 carbon atoms, 2 to 20 carbon atoms, 2 to 16 carbon atoms, 2 to 12 carbon atoms, 2 to 8 carbon atoms, or 2 to 4 carbon atoms, unless otherwise specified. The alkynyl group may have a linear, branched or cyclic structure and may be optionally substituted with one or more substituents. The substituent may be, for example, a polar functional group such as one or more substituents consisting of halogen, a hydroxyl group, an alkoxy group, a thiol group, or a thiol ether group.

In this specification, the term "alkylene group" may mean an alkylene group having 2 to 30 carbon atoms, 2 to 25 carbon atoms, 2 to 20 carbon atoms, 2 to 16 carbon atoms, 2 to 12 carbon atoms, 2 to 10 carbon atoms, or 2 to 8 carbon atoms, unless otherwise specified. The alkylene group is a divalent organic group in which two hydrogens are removed from different carbon atoms, may have a linear, branched or cyclic structure, and may be optionally substituted with one or more substituents. The substituent may be, for example, a polar functional group such as one or more substituents consisting of halogen, a hydroxyl group, an alkoxy group, a thiol group, or a thiol ether group.

In this specification, the term "alkylidene group" may mean an alkylidene group having 1 to 30 carbon atoms, 1 to 25 carbon atoms, 1 to 20 carbon atoms, 1 to 16 carbon atoms, 1 to 12 carbon atoms, 1 to 10 carbon atoms, or 1 to 8 carbon atoms, unless otherwise specified. The alkylidene group is a divalent organic group in which two hydrogens are removed from one carbon atom, and may have a linear, branched or cyclic structure and may be optionally substituted with one or more substituents. The substituent may be, for example, a polar functional group such as one or more substituents consisting of halogen, a hydroxyl group, an alkoxy group, a thiol group, or a thiol ether group.

In this specification, the term "alkoxy group" may mean an alkoxy group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkoxy group may have a linear, branched or cyclic alkyl group, and the alkyl group may be optionally substituted with one or more substituents. The substituent may be, for example, one or more substituents consisting of halogen, a hydroxyl group, an alkoxy group, a thiol group, or a thiol ether group.

In this specification, the term "alkylamine group" includes monoalkylamine (-NHR) or dialkylamine ($-NR_2$), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of halogen, a hydroxyl group, an alkoxy group, a thiol group, or a thiol ether group.

In this specification, the term "alkylamide" includes monoalkylamide (-C(O)NHR) or dialkylamide ($-C(O)NR_2$), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of halogen, a hydroxyl group, an alkoxy group, a thiol group, or a thiol ether group.

In this specification, the term "thiol ether group" or "sulfide" means -SR, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of halogen, a hydroxyl group, an alkoxy group, a thiol group, or a thiol ether group.

In this specification, the term "sulfoxide" means -S(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of halogen, a hydroxyl group, an alkoxy group, a thiol group, or a thiol ether group.

In this specification, the term "carbonyl" includes -C(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of halogen, a hydroxyl group, an alkoxy group, a thiol group, or a thiol ether group.

In this specification, the term "ester" includes -C(O)OR or -OC(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example,

one or more substituents consisting of halogen, a hydroxyl group, an alkoxy group, a thiol group, or a thiol ether group.

Examples of aliphatic tetracarboxylic dianhydride satisfying Chemical Formula 2 may include 1,2,4,5-cyclohexane tetracarboxylic dianhydride (or HPMDA), bicyclo[2.2.2]octane-2,3, 5,6-tetracarboxylic 2:3,5:6-dianhydride (BODA), 1,2,3,4-cyclohexane tetracarboxylic dianhydride (CHMDA), bicyclo[2.2.1]heptane-2,3,5,6-tetracarboxylic 2:3,5:6-dianhydride (BHDA), butane-1,2,3,4-tetracarboxylic dianhydride (BTD), bicyclo-[2.2.2]oct-7-ene-2-exo,3-exo,5-exo,6-exo-2,3:5,6-dianhydride (BTA), 1,2,3,4-cyclobutane tetracarboxylic dianhydride (CBDA), bicyclo[4.2.0]octane-3,4,7,8-tetracarboxylic dianhydride (OTD), norbonane-2-spiro-α-cyclohexanone-α'-spiro-2"-norbonane-5,5",6,6"-tetracarboxylic dianhydride (ChODA), cyclopentanone bis-spironorbonane tetracarboxylic dianhydride (CpODA), bicyclo [2.2.1]heptane-2,3,5-tricarboxyl-5-acetic dianhydride (BSDA), dicyclohexyl-3,3',4,4'-tetracarboxylic dianhydride (DCDA), dicyclohexyl-2,3'3,4'-tetracarboxylic dianhydride (HBPDA), 5,5'-oxybis(hexahydro-1,3-isobenzofurandione) (HODPA), 5,5'-methylenebis(hexahydro-1,3-isobenzofurandione) (HMDPA), 3,3'-(1,4-piperazindi yl)bis[dihydro-2,5-furandione] (PDSA), 5-(2,5-dioxotetrahydrofurfuryl)-3-methyl-3-cyclohexane-1,2-dicarboxylic anhydride (DOCDA), 3,4-dicarboxy-1,2,3,4-tetrahydro-1-naphthalene succinic dianhydride (TDA), 3,4-dicarboxy-1,2,3,4-tetrahydro-6-methyl-1-naphthalene succinic dianhydride (MTDA), 3,4-dicarboxy-1,2,3,4-tetrahydro-6-fluoro-1-naphthalene succinic dianhydride (FTDA), 3,3,3',3'-tetramethyl-1,1'-spirobisindan-5,5',6,6'-tetracarboxylic anhydride (SBIDA), 4,4,4',4'-tetramethyl-3,3',4,4'-tetrahydro-2,2'-spirobi[furo[3,4-g]chromene]-6,6',8,8'-tetraone (SBCDA), and 9,10-difluoro-9,10-bis(trifluoromethyl)-9,10-dihydroanthracene-2,3,6,7-tetracarboxylic acid dianhydride (6FDA).

Examples of aromatic tetracarboxylic dianhydride satisfying Chemical Formula 2 may include pyromellitic dianhydride (or PMDA), 3,3',4,4'-biphenyltetracarboxylic dianhydride (or BPDA), 2,3,3',4'-biphenyltetracarboxylic dianhydride (or a-BPDA), oxydiphthalic dianhydride (or ODPA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylene-bis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, and 4,4'-(2,2-hexafluoroisopropylidene)diphthalic dianhydride (6-FDA).

The compound represented by Chemical Formula 2 is preferably an aromatic tetracarboxylic dianhydride and may particularly include 3,3',4,4'-biphenyltetracarboxylic dianhydride (or BPDA), or 2,3, 3',4'-biphenyltetracarboxylic dianhydride (or a-BPDA).

As an example, the diamine monomer may include at least one compound represented by Chemical Formula 3 below.

[Chemical Formula 3]

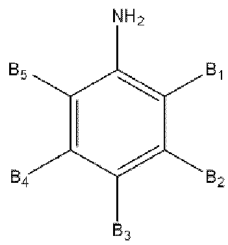

In Chemical Formula 3, any one of $B_1$ to $B_5$ is an amino group, and the others are hydrogen; halogen; a hydroxyl group; a carboxyl group; or a halogen-substituted or unsubstituted alkyl group.

In addition, the diamine monomer that can be used for preparing the polyamic acid solution is an aromatic diamine, and may be classified as follows.

1) Diamines having one benzene nucleus in their structure, for example diamines having a relatively rigid structure, such as 1,4-diaminobenzene (or p-phenylenediamine, PPD), 1,3-diaminobenzene, 2,4-diaminotoluene, 2,6-diaminotoluene, or 3,5-diaminobenzoic acid (or DABA);

2) Diamines having two benzene nuclei in structure, such as diaminodiphenyl ethers such as 4,4'-diaminodiphenyl ether (or oxydianiline, ODA) and 3,4'-diaminodiphenyl ether, 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, or 4,4'-diaminodiphenylsulfoxide;

3) Diamine having three benzene nuclei in structure, such as 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene, 1,4-bis(3-aminophenoxy)benzene (or TPE-Q), 1,4-bis(4-aminophenoxy)benzene (or TPE-Q), 1,3-bis(3-aminophenoxy)-4-trifluoromethylbenzene, 3,3'-diamino-4-(4-phenyl) phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, or 1,4-bis[2-(4-aminophenyl)isopropyl]benzene;

4) Diamines having four benzene nuclei in structure, such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, or 2,2-bis[4-(4-aminophenoxy)phenyl]-1, 1, 1,3,3,3-hexafluoropropane.

The diamine monomer may be used alone or in combination of two or more, if necessary, and may include, for example, 1,4-diaminobenzene (PPD), 1,3-diaminobenzene (MPD), 2,4-diaminotoluene, 2,6-diaminotoluene, or 4,4'-methylenediamine (MDA), and preferably the compound represented by Chemical Formula 2 may include 1,4-diaminobenzene (PPD).

In one example, the dianhydride monomer may be included in a range of 90 to 102 mol% based on 100 mol% of the diamine monomer. For example, the dianhydride monomer may be included in a range of 91 to 102 mol%, 92 to 102 mol%, 93 to 102 mol%, 94 to 102 mol%, 95 to 102 mol%, 96 to 102 mol%, 97 to 102 mol%, 98 to 102 mol%, 90 to 101 mol%, 90 to 100 mol%, or 90 to 99 mol% based on 100 mol% of the diamine monomer.

In one specific example, the polyimide precursor may include 5 to 40% by weight, 10 to 30% by weight, or 15 to 20% by weight of a solid content based on the total weight. In the present application, by controlling a solid content of the polyimide precursor, it is possible to prevent an increase in manufacturing cost and process time, which is caused by removing a large amount of solvent during a curing process while controlling an increase in viscosity.

The polyimide precursor of the present application may include a high-molecular-weight polyamic acid and at the same time have low viscosity characteristics. The polyimide precursor of the present application may have a viscosity of 50,000 cP or less, 40,000 cP or less, 30,000 cP or less, 20,000 cP or less, 10,000 cP or less, 9,000 cP or less, 5,000 cP or less, 4,000 cP or less, or 3,000 cP or less, as measured at a temperature of 23 °C and a shear rate of 1 $s^{-1}$. The lower limit is not particularly limited, but may be 500 cP or more or 1,000 cP or more. In one embodiment, the viscosity of the polyimide precursor of the present application may be in a range of 500 to 10,000 cP. The viscosity may be measured using, for example, Haake's MARS40 at 23 °C. The present application can provide a polyimide precursor with good processability and easy product application by adjusting the viscosity range.

The present application relates to a method of preparing a polyamic acid. The preparation method can provide a polyamic acid having a high weight average molecular weight by polymerizing the polyamic acid in a specific solvent, and provide a polyimide exhibiting a high imidization rate while having a high adhesive strength, good surface flatness and durability in an environmentally friendly manner, by mixing the polymerized polyamic acid with a silicon-containing first additive and a second additive including at least one of a phosphorus-based additive or an amine-based additive.

Specifically, the preparation method includes: a polymerization operation of polymerizing a dianhydride monomer and a diamine monomer under an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA) to prepare a polyamic acid; and a preparation operation of mixing the prepared polyamic acid

with a silicon-containing first additive containing at least one functional group and one or more second additives selected from a phosphorus-based additive having an aromatic ring group and an amine-based additive having an aromatic or heteroaromatic ring group to prepare a polyimide precursor.

As the second additive is mixed with the polyamic acid after polymerization, it may contribute to increasing an imidization rate during curing.

A detailed description of each composition will be omitted because it overlaps with the above description.

The present application also relates to a polyimide film including a cured product of the above-described polyimide precursor. The polyimide film may be manufactured in the form of a film by imidization of a polyimide precursor by thermal curing. Thermal curing conditions are not particularly limited, but the thermal curing may be performed in a temperature range of 100 to 400 °C. The polyimide film may be attached to a lower portion of a substrate of a display device.

Accordingly, the film may be formed to have a low thickness suitable for being attached to a product, and, for example, the thickness may be within a range of 1 to 100 μm, 5 to 90 μm, 5 to 80 μm, 5 to 70 μm, 10 to 100 μm, 10 to 90 μm, 10 to 80 μm, 10 to 70 μm, 10 to 60 μm, or 10 to 50 μm.

In addition, various physical properties of the film may be controlled in a numerical range as follows by adjusting a material and content ratio of the above-described polyimide precursor composition.

For example, the polyimide film may have an elongation of 100% or less, 95% or less, 90% or less, 85% or less, 80% or less, 75% or less, 70% or less, 65% or less, 60% or less, 55% or less, 50% or less, 45% or less, 40% or less, 35% or less, 30% or less, or 25% or less, a tensile strength of 700 MPa or less, 650 MPa or less, 600 MPa or less, 550 MPa or less, 500 MPa or less, 450 MPa or less, 400 MPa or less, 350 MPa or less, 300 MPa or less, 250 MPa or less, 200 MPa or less, or 150 MPa or less, and a modulus of 12 GPa or less, 11 GPa or less, 10 GPa or less, 9 GPa or less, 8 GPa or less, 7 GPa or less, 6 GPa or less, 5 GPa or less, 4 GPa or less, or 3 GPa or less, as measured using a universal testing machine (UTM) device. The measurement may be performed using a UTM device under conditions of a width of 20 mm, a grip distance of 50 mm, and a cross-head speed of 20 min/min.

In addition, the polyimide film may have a 1% thermal decomposition temperature (Td) of 300 to 600 °C, 350 to 600 °C, 400 to 600 °C, 450 to 600 °C, 500 to 600 °C, 540 to 600 °C, 560 to 600 °C, or 570 to 600 °C, as measured using a thermo gravimetric analysis (TGA) device. The 1% thermal decomposition temperature (Td) may be measured using a TGA device by removing moisture in the film at a temperature of 150 °C and then heating the film to 600 °C at a temperature increase rate of 10 °C/min.

In one example, the polyimide film may have an adhesive strength to a polyimide substrate of 0.05 to 0.5 N/cm, 0.05 to 0.45 N/cm, 0.05 to 0.4 N/cm, 0.05 to 0.35 N/cm, 0.05 to 0.3 N/cm, 0.05 to 0.25 N/cm, 0.05 to 0.2 N/cm, or 0.05 to 0.15 N/cm. The adhesive strength was measured on a polyimide substrate and a polyimide film having a size of 100 x 10 mm using INSTRON's UTM 5546 model under conditions of a 90° peel mode and a cross-head speed of 50 mm/min.

The present application also relates to a display device. For example, the device includes a substrate; and the above-described polyimide film attached to a lower portion of the substrate. A type of the display device is not particularly limited, and various types can be applied without limitation. As the above-described polyimide film is attached to the lower portion of the substrate, the display device can have excellent heat resistance, light resistance, and electrical characteristics.

DETAILED DESCRIPTION OF EXEMPLARY EMBODIMENTS

Although the present application is specifically described through the following examples, the scope of the present application is not limited by the following examples.

**Example 1**

Into a 500 mL glass reaction vessel equipped with a stirrer and a nitrogen gas inlet and outlet tube, N,N-dimethylpropionamide (DMPA) as an organic solvent, 100 mol% of 1,4-diaminobenzene (PPD) and 100 mol% of 3,3',4,4'-biphenyltetracarboxylic dianhydride (BPDA) were input. In addition, a polyamic acid solution having a solid concentration of 15% was prepared by polymerization at 25 °C, and 0.01% by weight of glycidoxypropyltrimethoxysilane (silicon-containing additive) and 0.1% by weight of triphenylamine (TPA) (amine-based additive) were added to the prepared total polyamic acid solution, and stirred at room temperature for 12 hours to prepare a polyimide precursor.

Further, the polyimide precursor was thermally cured from 100 °C to 460 °C at a temperature increase rate of 5 °C/min to prepare a polyimide film having a thickness of 10 μm.

**Examples 2 to 7**

A polyimide precursor was prepared in the same manner as in Example 1, except for compositions shown in Table 1 below.

**Comparative Examples 1 to 5.**

A polyamic acid solution was prepared in the same manner as in Example 1, except for compositions shown in Table 1 below.

For reference, triphenylphosphate (TPP) was used as the phosphorus-based additive in Table 1, and the phosphorus-based additive was added to a polymerized polyamic acid solution. In addition, a content of the phosphorus-based additive was expressed based on the total polyamic acid solution.

[Table 1]

| Classification | Diamine (mol%) | Dianhydride (mol%) | Silicon-containing additive (wt%) | Phosphorus-based additive (wt%) | Amine-based additive (wt%) | Solvent |
|---|---|---|---|---|---|---|
| | PPD | BDPA | | TPP | | |
| Example 1 | 100 | 100 | 0.01 | - | 0.1 | DMPA |
| Example 2 | 100 | 100 | 0.01 | - | 0.05 | DMPA |
| Example 3 | 100 | 100 | 0.01 | - | 0.01 | DMPA |
| Example 4 | 100 | 100 | 0.01 | 0.03 | - | DMPA |
| Example 5 | 100 | 100 | 0.01 | 0.05 | - | DMPA |
| Example 6 | 100 | 100 | 0.01 | 0.08 | - | DMPA |
| Example 7 | 100 | 100 | 0.01 | 0.10 | - | DMPA |
| Comparative Example 1 | 100 | 100 | - | - | - | NMP |
| Comparative Example 2 | 100 | 100 | - | - | - | DMPA |
| Comparative Example 3 | 100 | 100 | - | - | 1.0 | DMPA |
| Comparative Example 4 | 100 | 100 | - | - | 0.5 | DMPA |
| Comparative Example 5 | 100 | 100 | 0.01 | - | - | DMPA |
| | PPD: 1,4-diaminobenzene<br>BPDA: 3,3',4,4'-biphenyltetracarboxylic dianhydride<br>TPP: triphenyl phosphate<br>DMPA: N,N-dimethylpropionamide<br>NMP: N-methyl-2-pyrrolidone | | | | | |

**Experimental Example 1 - Surface flatness**

The surfaces of the polyimide films prepared in Examples and Comparative Examples were visually observed to determine whether air bubbles were generated to evaluate surface flatness, and the results are shown in Table 2 according to the criteria below.

O: No air bubbles (good surface flatness)
△: Less air bubbles (normal surface flatness)
X: Lots of air bubbles (poor surface flatness)

**Experimental Example 2 - 1% thermal decomposition temperature (1% Td)**

The thermogravimetric analyzer Q50 model from TA Instruments, Inc. was used, and the polyimide film was heated to 150 °C at a rate of 10 °C/min in a nitrogen atmosphere, and then moisture was removed by maintaining the isothermal temperature for 30 minutes. Thereafter, the temperature was increased to 600 °C at a rate of 10 °C/min, and the temperature at which a weight loss of 1% occurred was measured, and the results are shown in Table 2 below.

**Experimental Example 3 - Adhesive strength**

The adhesive strength of the polyimide films prepared in Examples and Comparative Examples to a polyimide-coated substrate was measured.

The adhesive strength was measured on a polyimide substrate and a polyimide film having a size of 100 x 10 mm using INSTRON's UTM 5546 model under conditions of a 90° peel mode and a cross-head speed of 50 mm/min.

[Table 2]

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|
| Appearance | ○ | ○ | ○ | ○ | ○ | ○ | ○ | ○ | X | Δ | Δ | ○ |
| 1% TD (°C) | 572 | 570 | 565 | 574 | 575 | 574 | 576 | 570 | 563 | 575 | 569 | 563 |
| Adhesive strength (N/cm) | 0.08 | 0.07 | 0.07 | 0.08 | 0.07 | 0.07 | 0.06 | 0.10 | 0.03 | 0.04 | 0.04 | 0.11 |
| Ex.: Example<br>Comp. Ex.: Comparative Example | | | | | | | | | | | | |

As shown in Table 2, it was confirmed that Examples including a silicon-containing additive and a phosphorus-based additive or an amine-based additive had good appearance (good surface flatness) without air bubbles, and high adhesive strength.

On the other hand, since NMP of Comparative Example 1 was classified as a hazardous substance, additional costs were required for purification, and there was a problem of causing environmental pollution during the treatment process.

In addition, it was confirmed that, in Comparative Examples 2 to 4, which used DMPA as an organic solvent but did not include a silicon-containing additive, air bubbles were generated and the appearance was poor (normal or poor surface flatness), and the adhesive strength was also poor compared to Examples including the silicon-containing additive. In addition, in the case of Comparative Example 5 including only the silicon-containing additive and not including both a phosphorus-based additive and an amine-based additive, it was confirmed that the adhesive strength was good, but the 1% thermal decomposition temperature was lower than that of Examples due to a low imidization rate.

Meanwhile, Examples including the amine-based additive or the phosphorus-based additive showed high 1% thermal decomposition temperature due to a high imidization rate, and Comparative Examples 3 and 4 including the amine-based additive or the phosphorus-based additive showed a 1% higher thermal decomposition temperature than Comparative Example 2 due to the high imidization rate.

Since the higher the 1% thermal decomposition temperature, the better the durability, it was confirmed from the above results that the amine-based additive or the phosphorus-based additive has an effect of improving the durability of polyimide.

The present application provides a polyimide precursor capable of realizing a polyimide with high adhesive strength, high surface flatness, and good durability in an environmentally friendly manner, a method of preparing the polyimide precursor, a polyimide film including a cured product of the polyimide precursor, and a display device having a polyimide film attached to a lower portion of a substrate.

## Claims

**1.** A polyimide precursor comprising:

a polyamic acid including a dianhydride monomer and a diamine monomer as polymerization units;
an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA);
a silicon-containing first additive including at least one functional group; and
one or more second additives selected from a phosphorus-based additive having an aromatic ring group and an amine-based additive having an aromatic or heteroaromatic ring group.

**2.** The polyimide precursor of claim 1, wherein the organic solvent is N,N-dimethylpropionamide (DMPA).

**3.** The polyimide precursor of claim 1, wherein a content of the silicon-containing first additive is 0.0001 to 1% by weight

based on the total polyimide precursor.

**4.** The polyimide precursor of claim 1, wherein the functional group of the silicon-containing first additive is an amine group, a carboxyl group, an alcohol, an alkoxy group, a mercapto, an epoxy group, or an isocyanate.

**5.** The polyimide precursor of claim 1, wherein a content of the second additive is 0.001 to 2% by weight based on the total polyimide precursor.

**6.** The polyimide precursor of claim 1, wherein the phosphorus-based additive is triphenyl phosphate or triphenylphosphine.

**7.** The polyimide precursor of claim 1, wherein the amine-based additive is isoquinoline, beta-picoline, 1,2-dimethylimidazole, benzimidazole, triphenylamine, or 2-phenylimidazole.

**8.** The polyimide precursor of claim 1, wherein the dianhydride monomer includes at least one of compounds represented by Chemical Formula 2 below:

[Chemical Formula 2]

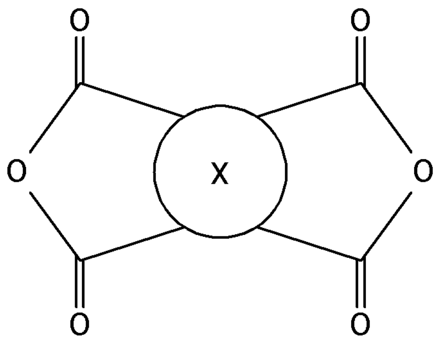

In Chemical Formula 2, X is a tetravalent aliphatic ring group, a tetravalent heteroaliphatic ring group, a tetravalent aromatic ring group, or a tetravalent heteroaromatic ring group, and a carbon atom of the carbonyl group in Chemical Formula 2 is linked to a ring-constituting atom of the aliphatic ring group, the heteroaliphatic ring group, the aromatic ring group, or the heteroaromatic ring group,
wherein the aliphatic ring group, the heteroaliphatic ring group, the aromatic ring group, or the heteroaromatic ring group is a monocyclic ring; is conjugated to each other to form a polycyclic ring; or is linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, -S-, -C(=O)-, $-S(=O)_2-$ and $-Si(R_b)_2-$, wherein $R_b$ is hydrogen or an alkyl group.

**9.** The polyimide precursor of claim 8,

wherein X is phenyl, biphenyl,

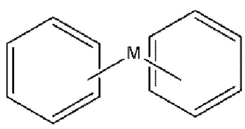

,

or an aliphatic ring group,
M includes at least one selected from the group consisting of a single bond, an alkylene group, an alkylidene group, -O-, -S-, -C(=O)-, and $-S(=O)_2-$.

**10.** The polyimide precursor of claim 8, wherein the compound represented by Chemical Formula 2 includes 3,3',4,4'-biphenyltetracarboxylic dianhydride (BPDA).

**11.** The polyimide precursor of claim 1, wherein the diamine monomer includes at least one of compounds represented by Chemical Formula 3 below:

[Chemical Formula 3]

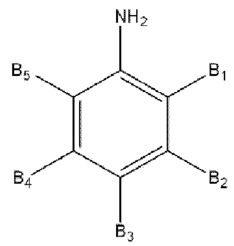

In Chemical Formula 3, any one of $B_1$ to $B_5$ is an amino group, and the others are hydrogen; halogen; a hydroxyl group; a carboxyl group; or a halogen-substituted or unsubstituted alkyl group.

**12.** The polyimide precursor of claim 11, wherein the compound represented by Chemical Formula 3 includes 1,4-diaminobenzene (PPD).

**13.** A method of preparing a polyimide precursor, comprising:

a polymerization operation of polymerizing a dianhydride monomer and a diamine monomer in the presence of an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA) to prepare a polyamic acid; and
a preparation operation of mixing the prepared polyamic acid with a silicon-containing first additive containing at least one functional group and one or more second additives selected from a phosphorus-based additive having an aromatic ring group and an amine-based additive having an aromatic or heteroaromatic ring group to prepare a polyimide precursor.

**14.** A polyimide film comprising a cured product of the polyimide precursor of claim 1.

**15.** The polyimide film of claim 14, wherein a thickness is in a range of 1 to 100 μm.

**16.** The polyimide film of claim 14, wherein an adhesive strength to a polyimide substrate is in a range of 0.05 to 0.5 N/cm.

**17.** The polyimide film of claim 14, wherein a 1% thermal decomposition temperature (Td) is in a range of 300 to 600 °C.

## INTERNATIONAL SEARCH REPORT

International application No. **PCT/KR2023/004311**

**A. CLASSIFICATION OF SUBJECT MATTER**

**C08G 73/10**(2006.01)i; **C08L 79/08**(2006.01)i; **C08K 5/521**(2006.01)i; **C08K 5/50**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08G 73/10(2006.01); C08J 5/18(2006.01); C08K 3/36(2006.01); C08K 5/3432(2006.01); C08K 5/5415(2006.01); C08L 79/08(2006.01); C09D 7/40(2018.01); C09D 7/63(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리이미드(polyimide), 전구체(precursor), 폴리아믹산(폴리아미드산, polyamic acid, polyamide acid), N,N-디에틸아세트아마이드(N,N-diethylacetamide), N,N-디에틸포름아마이드(N,N-diethylformamide), N-에틸피롤리돈(N-ethylpyrrolidone), 디메틸프로피온아마이드(dimethylpropionamide), 디에틸프로피온아마이드(diethylpropionamide), 아민(amine), 카르복시기(carboxy), 알코올(OH, alcohol), 알콕시(alkoxy), 머캅토(mercapto), 에폭시(epoxy), 이소시아네이트(isocyanate), 트리페닐포스페이트(triphenyl phosphate), 트리페닐포스핀(triphenyl phosphine)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0012196 A (LG CHEM, LTD.) 05 February 2018 (2018-02-05)<br>See claims 1-21; and paragraphs [0097], [0098], [0120]-[0122], [0143], [0200]-[0204] and [0207]. | 1-5,7-10,13-17 |
| Y | | 6,11,12 |
| Y | CN 105368048 A (GUILIN ELECTRICAL EQUIPMENT SCIENTIFIC RESEARCH INSTITUTE CO., LTD.) 02 March 2016 (2016-03-02)<br>See claims 1-8. | 6,11,12 |
| Y | KR 10-2019-0003328 A (SKCKOLON PI INC.) 09 January 2019 (2019-01-09)<br>See claims 1-20. | 6,11,12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **19 July 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/004311**

**C. DOCUMENTS CONSIDERED TO BE RELEVANT**

| Category* | Citation of document, with indication, where appropriate, of the relevant passages | Relevant to claim No. |
|---|---|---|
| Y | KR 10-1992576 B1 (SKCKOLON PI INC.) 24 June 2019 (2019-06-24) See claims 1, 5-10 and 13-15; and paragraphs [0064]-[0077]. | 6 |
| A | KR 10-2017-0016384 A (UBE INDUSTRIES, LTD.) 13 February 2017 (2017-02-13) See claims 1-10; and paragraph [0036]. | 1-17 |
| A | KR 10-2013534 B1 (SKCKOLON PI INC.) 22 August 2019 (2019-08-22) See claims 1-14. | 1-17 |

Form PCT/ISA/210 (second sheet) (July 2022)

**INTERNATIONAL SEARCH REPORT**
**Information on patent family members**

International application No.
**PCT/KR2023/004311**

| Patent document cited in search report | Publication date (day/month/year) | Patent family member(s) | Publication date (day/month/year) |
|---|---|---|---|
| KR 10-2018-0012196 A | 05 February 2018 | CN 109071810 A | 21 December 2018 |
| | | CN 109071810 B | 13 November 2020 |
| | | EP 3392293 A1 | 24 October 2018 |
| | | EP 3392293 B1 | 22 February 2023 |
| | | JP 2019-509364 A | 04 April 2019 |
| | | JP 6725100 B2 | 15 July 2020 |
| | | KR 10-1993647 B1 | 30 September 2019 |
| | | TW 201803917 A | 01 February 2018 |
| | | TW I702244 B | 21 August 2020 |
| | | US 11655337 B2 | 23 May 2023 |
| | | US 2021-0179780 A1 | 17 June 2021 |
| | | WO 2018-021747 A1 | 01 February 2018 |
| CN 105368048 A | 02 March 2016 | CN 105368048 B | 10 April 2018 |
| KR 10-2019-0003328 A | 09 January 2019 | CN 110753715 A | 04 February 2020 |
| | | CN 110753715 B | 17 May 2022 |
| | | KR 10-1948819 B1 | 18 February 2019 |
| | | TW 201905040 A | 01 February 2019 |
| | | TW I758507 B | 21 March 2022 |
| | | WO 2019-004677 A1 | 03 January 2019 |
| KR 10-1992576 B1 | 24 June 2019 | TW 202018023 A | 16 May 2020 |
| | | TW I736867 B | 21 August 2021 |
| | | WO 2020-091147 A1 | 07 May 2020 |
| KR 10-2017-0016384 A | 13 February 2017 | CN 106574050 A | 19 April 2017 |
| | | CN 106574050 B | 03 September 2019 |
| | | EP 3153539 A1 | 12 April 2017 |
| | | JP 2016-011418 A | 21 January 2016 |
| | | JP 6544055 B2 | 17 July 2019 |
| | | KR 10-2388536 B1 | 20 April 2022 |
| | | TW 201609969 A | 16 March 2016 |
| | | TW I726845 B | 11 May 2021 |
| | | US 2017-0137571 A1 | 18 May 2017 |
| | | WO 2015-186782 A1 | 10 December 2015 |
| KR 10-2013534 B1 | 22 August 2019 | JP 2022-515452 A | 18 February 2022 |
| | | JP 7235356 B2 | 08 March 2023 |
| | | KR 10-2107574 B1 | 07 May 2020 |
| | | US 2022-0119676 A1 | 21 April 2022 |
| | | WO 2020-138687 A1 | 02 July 2020 |
| | | WO 2020-138743 A1 | 02 July 2020 |

Form PCT/ISA/210 (patent family annex) (July 2022)